# EUROPÄISCHE PATENTSCHRIFT

(11) **EP 1 436 175 B1**
(45) Veröffentlichungstag und Bekanntmachung des Hinweises auf die Patenterteilung: **14.06.2006**
(21) Anmeldenummer: 02779462.7
(22) Anmeldetag: 04.10.2002
(51) Int. Cl.: B60R 21/20

(54) **ABDECKUNG FÜR EINE AIRBAGEINHEIT**
COVERING ELEMENT FOR AIRBAG SYSTEM
ELEMENT DE RECOUVREMENT POUR SYSTEME D'AIRBAG

(30) Priorität: 12.10.2001 DE 10150611
(43) Veröffentlichungstag der Anmeldung: 14.07.2004
(73) Patentinhaber: DaimlerChrysler AG, 70567 Stuttgart (DE)
(72) Erfinder: HECKL, Dieter, 82276 Adelshofen (DE); REUTER, Jörg, 73092 Heiningen (DE); VOGT, Alexandra, 71272 Renningen (DE)
(86) Internationale Anmeldenummer: PCT/EP2002/011145
(87) Internationale Veröffentlichungsnummer: WO 2003/033312

(56) Entgegenhaltungen:
- EP-A- 0 943 709
- WO-A-98/10961
- DE-A- 4 101 559
- DE-A- 10 001 387
- DE-A- 10 006 060
- DE-A- 19 637 321
- US-A- 5 096 220

## Beschreibung

Die Erfindung betrifft eine Abdeckung für eine unter einer Verkleidung angeordnete Airbageinheit gemäß dem Oberbegriff des Patentanspruchs 1.

Aus der DE 198 37 421 A1 ist eine derartige Anordnung bereits bekannt. Um den Durchtritt eines unterhalb der Verkleidung angeordneten Airbags zu ermöglichen, ist in der Verkleidung mindestens eine Sollbruchstelle vorgesehen, die beim Entfalten des Airbags aufbricht. Es ist in der Regel aus ästhetischen Gründen nicht gewünscht, die Sollbruchstelle vom Fahrzeuginnenraum aus zu sehen, so dass diese durch entsprechende Maßnahmen, zum Beispiel durch Einbringen der Sollbruchstelle von der Rückseite der Verkleidung, unsichtbar gestaltet wird.

Aus der guttungsgemäßen EP 0 943 709 A1 ist bereits eine Abdeckung für eine Airbageinheit bekannt, bei der die Verkleidung mit einem textilen Flächengebilde überzogen ist. Für den Durchtritt des Airbags ist in dem Flächengebilde eine unsichtbare Sollbruchstelle vorgesehen, die bei einer definierten Kraft aufreißt.

Es ist Aufgabe der Erfindung, die Gestaltungsmöglichkeiten für Verkleidungen in Kraftfahrzeugen zu erhöhen, wobei Sollbruchstellen für unter der Verkleidung angeordnete Airbageinheiten vom Fahrzeuginnenraum nach wie vor nicht sichtbar sind.

Die Aufgabe wird erfindungsgemäß durch die Merkmale des Patentanspruchs 1 gelöst.

Die Gestaltungsmöglichkeiten für Verkleidungen, in die eine Abdeckung einer Airbageinheit integriert ist, werden in erstaunlich einfacher Weise erhöht, wenn die Verkleidung mit einem textilen Flächengebilde, zum Beispiel mit einem Flachgestrick, überzogen wird. Durch die Vielfältigkeit von textilen Flächengebilden kann die Oberflächenstruktur der Verkleidung in nahezu jeder Weise ausgebildet werden. Durch den Einsatz unterschiedlichster Fertigungsmöglichkeiten lassen sich textile Flächengebilde sowohl in der Oberflächenmusterung als auch in der Farbgebung kostengünstig herstellen. Für den Durchtritt des Airbags wird zumindest im Bereich der Sollbruchstelle der Verkleidung das textile Flächengebilde dadurch geschwächt, dass textiles Material mit geringerer Reißfestigkeit verarbeitet wird. Das textile Material ist flächendeckend, d.h. vollständig aus Fäden unterschiedlicher Reißfestigkeit gefertigt. Es werden in dem textilen Material Fäden mit geringerer und höherer Reißfestigkeit wechselweise verarbeitet. Die Anzahl und die Bindung der Fäden in dem textilen Material sind derart aufeinander abgestimmt, dass sich ein textiles Flächengebilde ergibt, das zwar insgesamt eine geringe Reißfestigkeit aufweist, aber dennoch als textiler Überzug ausreichend haltbar gestaltet ist. So kann das textile Material bei Beaufschlagung mit einer definierten Kraft reißen, wobei durch die Verarbeitung der Fäden mit höherer Reißkraft ausreichend Gestaltungsmöglichkeiten für das textile Flächengebilde bleiben. In dem textilen Material sind somit gleichmäßig Schwächungen enthalten, so dass das Maschengebilde unabhängig von der Sollbruchstelle der Abdeckung auf die Verkleidung gezogen werden kann. Die Bindung der Fäden untereinander ist so gestaltet, dass bei normaler Betriebsbelastung, d.h. im verkleideten Zustand, kein Fadenbruch auftritt.

Vorteilhafterweise ist das textile Flächengebilde ein Maschengebilde, d.h. ein Gestrick oder Gewirk, so dass sich vollkonfektionierte Teile herstellen lassen. Das hat den Vorteil, dass mit der für Maschengebilde typischen Elastizität die vollkonfektionierten Teile eine optimale Passform aufweisen, so dass diese ohne weitere Bearbeitungsschritte zum Endprodukt überführt werden können. Mit den bekannten Herstellungsverfahren für Maschengebilde, wie beispielsweise Wirken oder Stricken, kann zudem nahezu jede Formgebung umgesetzt werden, so dass die Formen für die Verkleidungen unabhängig von dem textilen Überzug gestaltet werden können.

Die Verkleidung kann in einer bevorzugten Ausführungsform als Spritzgußteil aus Polypropylen mit EPDM-Anteil (Ethylen-Propylen-Kautschuk) ausgebildet sein. Von der Rückseite her kann dann eine Sollbruchstelle eingebracht werden, die beispielsweise eingelasert sein kann.

Um die Verkleidung für Bagatelleunfälle abzupolstern, kann zwischen dem Maschengebilde und der Verkleidung ein Vlies angeordnet sein. Um in diesem Fall das Maschengebilde im Bereich der Sollbruchstelle zu schwächen können von der Rückseite der Verkleidung ein oder mehrere Splits eingelasert werden, die die Verkleidung und das Vlies vollständig durchsetzen, während das textile Flächengebilde gar nicht bzw. nur teilweise angerissen wird. Die Splits haben einen V-förmigen Querschnitt und schwächen die Abdeckung und gegebenenfalls das Vlies so, dass der Airbag durch seine beim Entfalten wirkenden Kraft die Splits aufreißt.

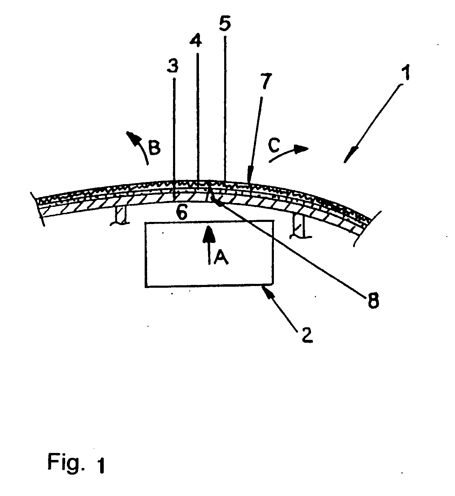

Anhand der Zeichnung wird der Aufbau einer Abdeckung für eine Airbageinheit erläutert.

Die einzige Figur zeigt dabei einen Querschnitt durch eine Verkleidung 1, die über einer Airbageinheit 2 angeordnet ist. Die Verkleidung 1 umfasst einen Grundkörper 3, der als Spritzgussteil ausgeführt ist. Auf dem Grundkörper 3 ist eine Klebstoffschicht 4 aufgebracht, die ein Flachgestrick 5 gegen Verrutschen fixiert. Bei dem Flachgestrick handelt es sich um ein Maschengebilde, bei dem wechselweise Kettfäden mit geringerer und höherer Reißfestigkeit verarbeitet sind.

Die Airbageinheit 2 ist in einem Schusskanal 6 angeordnet, der nach außen durch eine durch die Verkleidung 1 gebildete Abdeckung 7 geschlossen wird, solange die Airbageinheit 2 inaktiv ist.

Etwa mittig des Schusskanals 6 ist in der Abdeckung 7 eine vom Fahrzeuginnenraum her unsichtbare Sollbruchstelle 8 eingebracht. Die Sollbruchstelle 8 ist von der Rückseite aus eingelasert, d.h. die Abdeckung 7 weist an dieser Stelle eine Materialschwächung auf.

Kommt es nun zur Aktivierung der Airbageinheit 2, so tritt der Airbag in Richtung des Pfeils A aus und beaufschlagt die Sollbruchstelle 8, so dass die Abdeckung 7 zweigeteilt wird und die beiden Teile um nicht dargestellte Scharniere gemäß den Pfeilen B und C wegschwenken.

Durch die Entfaltungskraft des Airbags wird auch das Flachgestrick 5 beaufschlagt. Da im Bereich über der Sollbruchstelle 8 das Flachgestrick 5 durch Einarbeitung von Fäden geringerer Reißfestigkeit durchgehend geschwächt ist, reicht die Entfaltungskraft des Airbags aus, um das Flachgestrick 5 mit der Abdeckung 7 zu durchreißen und die Abdeckung 7 gemäß den Pfeilen B und C zu verschwenken, so dass der Weg für den Airbag frei ist. Die Bindung des Flachgestricks sowie die Wahl des Materials der eingesetzten Kettfäden werden in Abhängigkeit der zu erwartenden Durchschlagskraft des Airbags abgestimmt.

## Patentansprüche

1. Abdeckung für eine unter einer Verkleidung angeordnete Airbageinheit, wobei für den Durchtritt eines sich entfaltenden Airbags mindestens eine vom Fahrzeuginnenraum aus nicht sichtbare Sollbruchstelle in der Verkleidung vorgesehen ist, wobei die Verkleidung (1) auf ihrer dem Fahrzeuginnenraum zugewandten Seite mit einem textilen Flächengebilde (5) überzogen ist, wobei
das textile Flächengebilde zumindest im Bereich der Sollbruchstelle (8) textiles Material mit geringer Reißfestigkeit aufweist, **dadurch gekennzeichnet, dass** in dem textilen Material wechselweise Fäden mit geringerer und höherer Reißfestigkeit verarbeitet sind.

2. Abdeckung nach Anspruch 1,
**dadurch gekennzeichnet,**
**dass** das textile Flächengebilde, mit dem die Verkleidung (1) überzogen ist, ein Maschengebilde (5)ist.

3. Abdeckung nach Anspruch 2,
**dadurch gekennzeichnet,**
**dass** die Verkleidung (1) einen Grundkörper (3) umfasst, der als Spritzgussteil gefertigt ist.

4. Abdeckung nach den Ansprüchen 2 bis 3,
**dadurch gekennzeichnet,**
**dass** zwischen der Verkleidung (1) und dem Maschengebilde (5) ein Vlies angeordnet ist.

5. Abdeckung nach Anspruch 2 oder 3,
**dadurch gekennzeichnet,**
**dass** die Sollbruchstelle (8) in Form eines Splits von der Rückseite der Abdeckung (7) eingebracht ist und dabei das Maschengebilde (5) höchstens teilweise durchsetzt.

6. Abdeckung nach Anspruch 5,
**dadurch gekennzeichnet,**
**dass** der Split von der Rückseite der Verkleidung (1) eingelasert ist.

## Claims

1. Covering for an airbag unit arranged below a panel, at least one predetermined breaking point which is not visible from the vehicle interior being provided in the panel for the passage of a deploying airbag, the panel (1) being covered on its side facing the vehicle interior with a nonwoven textile fabric (5) the nonwoven textile fabric having, at least in the region of the predetermined breaking point (8), textile material of lower tearing strength, **characterized in that**, in the textile material, threads of lower and higher tearing strength are incorporated in alternating fashion in the textile material.

2. Covering according to Claim 1,
**characterized**
**in that** the nonwoven textile fabric with which the panel (1) is covered is a mesh fabric (5).

3. Covering according to Claim 2,
**characterized**
**in that** the panel (1) comprises a basic body (3) which is manufactured as an injection moulded part.

4. Covering according to Claims 2 to 3,
**characterized**
**in that** a nonwoven is arranged between the panel (1) and the mesh fabric (5).

5. Covering according to Claim 2 or 3,
**characterized**
**in that** the predetermined breaking point (8) is introduced from the rear side of the covering (7) in the form of a split and at most partially penetrates the mesh fabric (5).

6. Covering according to Claim 5,
**characterized**
**in that** the split is introduced from the rear side of the panel (1) by laser.

## Revendications

1. Couvercle pour une unité de coussin gonflable de sécurité disposée en dessous d'un habillage, au moins un emplacement de rupture contrôlée invisible depuis l'habitacle du véhicule étant prévu dans l'habillage pour permettre le passage d'un coussin gonflable de sécurité qui se déploie, l'habillage (1) étant revêtu sur son côté tourné vers l'habitacle du véhicule d'une structure textile plate (5), la structure textile plate présentant un matériau textile dont la résistance à la déchirure est plus faible au moins dans la zone de l'emplacement (8) de rupture contrôlée,
**caractérisé en ce que** dans le matériau textile, on utilise en alternance des fils à petite résistance à la rupture et des fils à haute résistance à la rupture.

2. Couvercle selon la revendication 1, **caractérisé en ce que** la structure textile plate qui recouvre l'habillage (1) est un tricot (5).

3. Couvercle selon la revendication 2, **caractérisé en ce que** l'habillage (1) comprend un corps de base (3) fabriqué par moulage par injection.

4. Couvercle selon les revendications 2 à 3, **caractérisé en ce qu'**un feutre est disposé entre l'habillage (1) et le tricot (5). -

5. Couvercle selon les revendications 2 ou 3, **caractérisé en ce que** l'emplacement (8) de rupture contrôlée présente la forme d'une fente ménagée dans le côté arrière du couvercle (7) et qui traverse au plus partiellement le tricot (5).

6. Couvercle selon la revendication 5, **caractérisé en ce que** la fente est réalisée par laser dans le côté arrière de l'habillage (1).
